# EUROPÄISCHE PATENTSCHRIFT

(11) **EP 0 470 110 B1**
(45) Veröffentlichungstag und Bekanntmachung des Hinweises auf die Patenterteilung: **21.09.1994**
(21) Anmeldenummer: 90906198.8
(22) Anmeldetag: 21.04.1990
(51) Int. Cl.: H04N 7/13, G10L 7/00

(54) **SIGNALVERARBEITUNGSSYSTEM FÜR DIGITALE SIGNALE**
SIGNAL-PROCESSING SYSTEM FOR DIGITAL SIGNALS
SYSTEME DE TRAITEMENT DE SIGNAUX NUMERIQUES

(30) Priorität: 29.04.1989 DE 3914267
(43) Veröffentlichungstag der Anmeldung: 12.02.1992
(73) Patentinhaber: DEUTSCHE THOMSON-BRANDT GMBH, 78048 Villingen-Schwenningen (DE)
(72) Erfinder: KEESEN, Heinz-Werner, D-3000 Hannover 91 (DE)
(74) Vertreter: Einsel, Robert, Dipl.-Ing.
(86) Internationale Anmeldenummer: EP9000645
(87) Internationale Veröffentlichungsnummer: WO9013971

(56) Entgegenhaltungen:
- EP-A- 0 165 488
- WO-A-88/01811
- FR-A- 2 621 146
- US-A- 2 984 626
- IEEE Global Telecommunications Conference & Exhibition, Hollywood, Florida, 28 November - 1 December 1988, vol. 2, IEEE, A. Léger et al.: "Still picture compression algorithms evaluated for international standardisation", pages 1028-1032
- Coding Symposium, PCS 88, Turin, K. Nemoto et al.: "Average separation method for DCT coding using smooth interpolation" pages 8.12.1-8.12.2

## Beschreibung

Die Erfindung betrifft ein Signalverarbeitungssystem für blockweise verarbeitete digitale Signale.

Aus EP-A-0 084 270 ist es bekannt, digitale Videosignale in einem Sender bzw. vor einer Übertragung verbunden mit einer Datenkompression, z.B. durch eine DCT (discrete cosine transform), blockweise zu kodieren und in einem Empfänger bzw. bei der Wiedergabe das datenkomprimierte Signal blockweise zu dekodieren.
Die Datenkompression kann z.B. dadurch geschehen, daß zeitlich sich nicht ändernde Signalteile nicht fortlaufend übertragen werden und daß ein Quantisierer die in den Spektralbereich transformierten zu übertragenden Videosignalanteile quantisiert. Durch die Quantisierung wird das Videosignal zusätzlich datenkomprimiert. Allerdings kann das Videosignal dadurch gröber dargestellt sein und nicht mehr originalgetreu rekonstruiert werden.

Wenn das Videosignal blockweise verarbeitet und z. B. zusätzlich quantisiert wird, können aber auch an den Blockrändern Helligkeits- und/oder Farbsprünge auftreten, wenn die Helligkeits- und/oder Farbwerte an den Grenzen des Blockes nicht an die Helligkeits- und/oder Farbwerte an der entsprechenden Grenze eines benachbarten Blockes angepaßt sind. Dadurch werden die Blockgrenzen störend sichtbar gemacht.

Aus dem Artikel "Average Separation Method for DCT Coding Using Smooth Interpolation" (aus dem Tagungsband des Picture Coding Symposium, PCS 88, Turin, Italien, S. 8.12 - 1 und 8.12 - 2) ist es bekannt, den Gleichanteil von DCT-Blöcken eines Videosignales iterativ solange zu verändern, bis mit Hilfe einer linearen Interpolation, die die Gleichanteile des aktuellen und der benachbarten Blocks als Stützwerte hat, die Sichtbarkeit von Blockgrenzen durch Sprünge von Helligkeits- und/oder Farbwerten an den Blockgrenzen beseitigt ist.
Weil dieses Verfahren iterativ arbeitet, erfordert es eine sehr hohe Verarbeitungsgeschwindigkeit, und weil bei einer Blockgröße von z.B. 8 mal 8 Bildpunkten nur der Quantisierungsfehler von Gleichanteilen ausgeglichen wird, wird bei der Codierung der übrigen 63 Transformationskoeffizienten bei diesem Verfahren keine Datenreduktion ohne Verminderung der Bildqualität erreicht.

In FR-A-2621146 wird eine Prädiktion von Fehlersignalen durchgeführt, wobei die Fehlersignale anschließend mit einer diskreten Sinustransformation codiert werden. Um die Codierqualität zu verbessern, werden invers transformierte Fehlersignale bei der Prädiktion berücksichtigt.

Der Erfindung liegt die Aufgabe zugrunde, bei einem Signalverarbeitungssystem für digitale Signale, das aus einem Coder, z.B. dem Aufnahmeteil eines digitalen Videorekorders, und aus einem Decoder, z.B. dem Wiedergabeteil eines digitalen Videorekorders, besteht und die Signale mit Datenkompression blockweise verarbeitet, die Sichtbarkeit von Blockgrenzen zu vermindern.

Diese Aufgabe wird durch die im Patentanspruch 1 angegebenen Merkmale gelöst. Vorteilhafte Weiterbildungen der Erfindung sind in den Unteransprüchen beschrieben.

Die Erfindung besteht darin, daß in einem Coder des Signalverarbeitungssystem ein Videosignalblock von z.B. 8 mal 8 Bildpunkten in einer Schleife über alle Transformationskoeffizienten des Blocks koeffizientenweise in einen Spektralbereich transformiert wird, der jeweilige Transformationskoeffizient, beginnend mit dem Gleichanteil, quantisiert und zur Übertragung bereitgestellt wird, danach jeder der bisher schon berechneten Transformationskoeffizienten des Blocks in den Zeitbereich rücktransformiert wird, mit einer entsprechenden Nachfilterung der diesem Block entsprechende Bildinhalt an die Helligkeit und/oder Farbe der Bildinhalte der Blockränder der angrenzenden Blöcke angepaßt wird und entsprechend dem Differenzbild zwischen Originalblock und gefiltertem Block der nächste Transformationskoeffizient, d. h. ein Prädiktionswert, gebildet wird.
Ein Quantisierer muß nicht notwendigerweise vorhanden sein. Wenn er aber vorhanden ist, so ist es vorteilhaft, ihn in die Schleife für die Koeffizientenberechnung einzufügen. Dadurch wird für einen Koeffizienten-Prädiktionswert der Quantisierungsfehler mit berücksichtigt. Daraus resultiert eine bessere Bildqualität bzw. eine niedrigere Datenrate am Ausgang des Coders.

Die Transformation bzw. Rücktransformation kann eine DCT bzw. inverse DCT sein oder allgemein eine Filterung, die aus einem Analysefilter und einem Synthesefilter besteht. Die Transformation kann zweidimensional oder eindimensional sein.

Die Erfindung kann auch für die Codierung bzw. Decodierung von digitalen Audiosignalen verwendet werden. Für Audiosignale ist die Transformation eindimensional.

Die Schleife über alle Transformationskoeffizienten eines Blocks wird im Coder und Decoder durchgeführt.
Im Coder wird die Arbeitsweise des Decoders nachgebildet, so daß modifizierte Koeffizienten übertragen werden können.
Modifiziert bedeutet, daß zum einen die Koeffizienten gröber quantisiert werden können und dadurch eine zusätzliche Datenreduktion erreicht wird und zum anderen, daß durch die Verwendung von in dem jeweiligen Block bereits vorher modifizierten Koeffizienten in Verbindung mit der Nachfilterung die gröbere Quantisierung nicht Helligkeits- und/oder Farbsprünge an den Blockgrenzen sichtbar werden läßt.

Weil der Decoder im Coder nachgebildet wird und weil in beiden die bereits ermittelten Koeffizienten für den aktuellen Block gespeichert sind, kann der Prädiktionswert für den nächsten Koeffizienten stärker quantisiert werden bzw. einen kleineren Wert annehmen und somit für jeden Koeffizienten des Blockes, ausgenommen den letzten Koeffizienten, eine Datenkompression ohne wesentliche Bildqualitätsverschlechterung vorgenommen werden.

Nachstehend wird ein Ausführungsbeispiel der Erfindung anhand der Zeichnungen erläutert. Diese zeigen in
- Fig. 1: Blockdiagramm eines Videosignal-Prozessors,
- Fig. 2: Blockdiagramm eines Coders,
- Fig. 3: Blockdiagramm eines Decoders,
- Fig. 4: Blockdiagramm eines Coders mit Koeffizienten-Nachfilterung
- Fig. 5: Blockdiagramm eines Decoders mit Koeffizienten-Nachfilterung

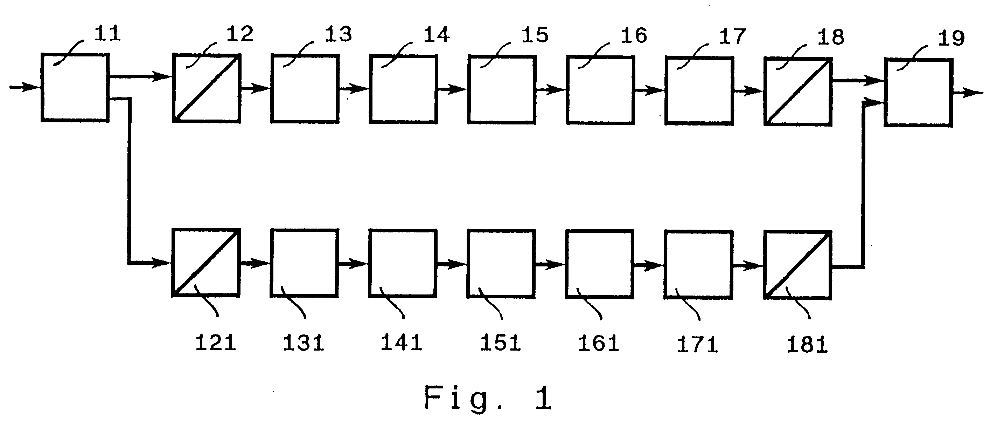

Fig. 1 zeigt ein digitales Videosignalverarbeitungssystem z.B. den Videosignalteil eines digitalen Videorecorders, mit einer Schaltung 11, die ein ankommendes analoges FBAS-Signal in einen Luminanzanteil und in einen Chrominanzanteil trennt.

Das Luminanzsignal wird dem A/D-Wandler 12 zugeführt, in einer Schaltung 13 z.B. zweidimensional DCT-transformiert, in einer Schaltung 14 mit einer Kanalcodierung moduliert, in einem Speicher 15, z.B. einem Magnetband, gespeichert, in einer Schaltung 16 entsprechend der Kanalcodierung demoduliert, in einer Schaltung 17 z.B. zweidimensional invers DCT-transformiert und über einen D/A-Wandler 18 mit dem entsprechenden Chrominanzsignal aus dem D/A-Wandler 181 in der Schaltung 19 wieder zu einem analogen FBAS-Signal zusammengefügt.

Das Chrominanzsignal wird in den Schaltungen 121 bis 181 entsprechend dem Luminanzsignal in den entsprechenden Schaltungen 12 bis 18 verarbeitet.
Für einen digitalen Audiosignal-Prozessor können z.B. für einen Tonkanal die Schaltungen 12 bis 18 verwendet werden und die Schaltungen 11, 19 und 121 bis 181 entfallen.

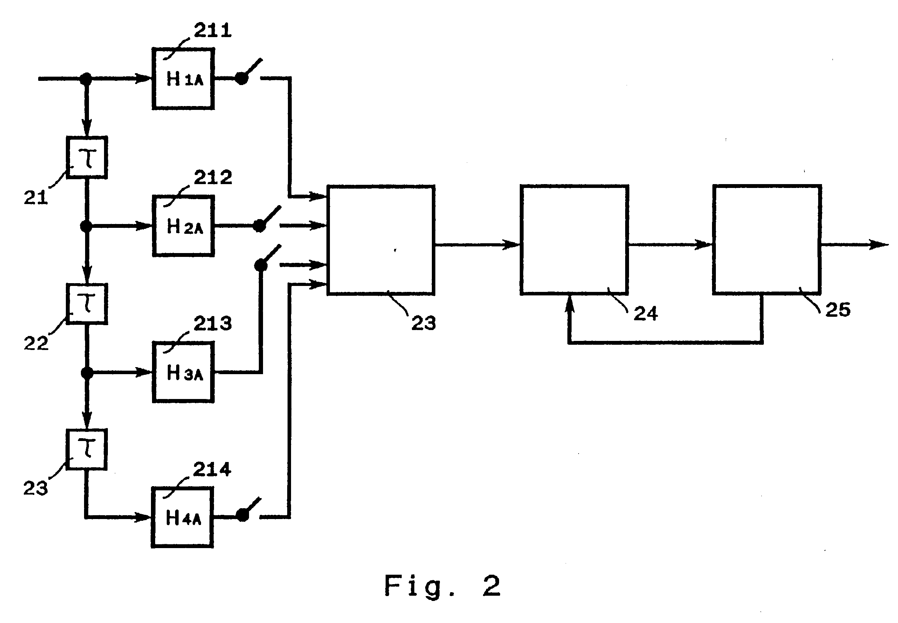

Fig. 2 zeigt eine bekannte Ausführungsform der Schaltung 13 bzw. 131 im Detail.
In den Schaltungen 211 bis 214 wird ein ankommendes Videosignal bildpunktweise mit einem Analysefilter in eine andere Darstellungsform transformiert. Das Analysefilter kann z.B. eine eindimensionale 4 mal 1-DCT durchführen. Für eine 8 mal 1-DCT wären statt der vier Analysefilter 211 bis 214 acht Analysefilter und statt der drei Verzögerungsschaltungen 221 bis 223 sieben Verzögerungsschaltungen ensprechend angeordnet. Für eine zweidimensionale DCT können die Schaltungen 211 bis 214, 221 bis 223 und 23 zweimal hintereinander angeordnet werden. In der ersten der beiden Schaltungsgruppen werden dann z.B. aus acht Bildpunkten einer Zeile acht zeilenförmig angeordnete eindimensinal transformierte DCT-Koeffizienten. Die Transformationskoeffizienten von z.B. acht solchen untereinanderliegenden Zeilenabschnitten werden dann zu einem Block von 8 mal 8 Transformationskoeffizienten zusammengefaßt. Aus diesem Transformationskoeffizientenblock werden dann jeweils acht Koeffizienten spaltenweise der zweiten der beiden Schaltungsgruppen zugeführt und dort wieder eindimensional DCT-transformiert.

In Schaltung 211 wird z.B. der erste Koeffizient einer DCT aus vier Bildpunkten eines Videosignal-Zeilenabschnittes berechnet, d.h. von einem Zeitbereich in einen Spektralbereich transformiert.

In Schaltung 212 wird durch die Zeitverzögerungsschaltung 221 um ein Bildpunktabtastintervall zeitlich verzögert der zweite DCT-Koeffizient aus den genannten vier Bildpunkten berechnet. Entsprechend wird durch die Schaltungen 213, 221 und 222 der dritte Koeffizient um 2 Bildpunkttastintervalle und durch die Schaltungen 214 und 221 bis 223 der vierte Koeffizient um 3 Bildpunktabstastintervalle verzögert berechnet.

In Schaltung 23 werden die vier Signale bzw. Koeffizienten aus den Schaltungen 211 bis 214 zusammengefaßt und einem Quantisierer 24 zugeführt. Die Kennlinie des Quantisierers 24 wird durch den Füllstand des Zwischenspeichers 25 derart gesteuert, daß der Zwischenspeicher 25 in Bezug auf die gespeicherte Datenmenge weder leer ist noch überläuft. Der Zwischenspeicher 25 wird so ausgelesen, daß an seinem Ausgang ein koninuierlicher Datenstrom abgegeben wird.

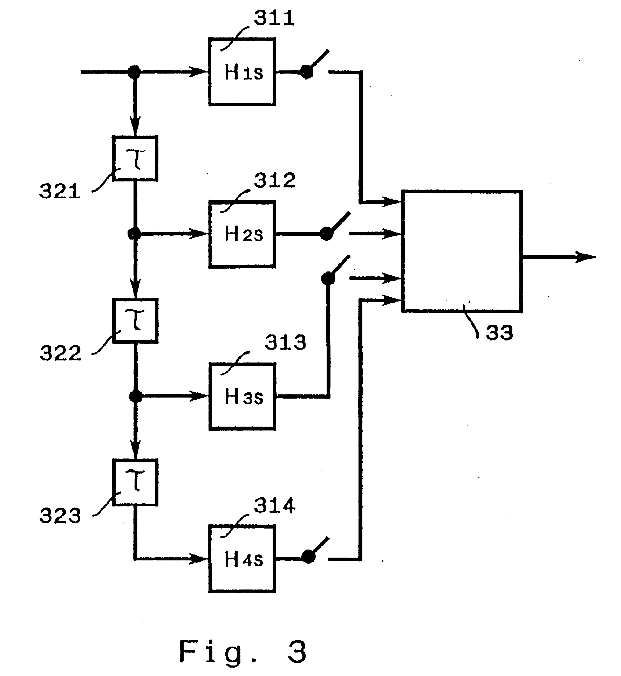

Fig. 3 zeigt eine bekannte Ausführungsform der Schaltung 17 bzw. 171 im Detail.
In den Schaltungen 311 bis 314 wird ein ankommendes transformiertes Videosignal koeffizientenweise mit einem Synthesefilter in die ursprüngliche Darstellungsform rücktransformiert. Das Synthesefilter kann z.B. eine inverse eindimensionale 4 mal 1 -DCT durchführen. Für eine zweidimensionale DCT können die Schaltungen 311 bis 314 und 321 bis 323 zweimal hintereinander angeordnet werden entsprechend der Beschreibung für Fig. 2.

In Schaltung 311 wird z.B. der erste von vier Bildpunkten eines Zeilenabschnittes berechnet, d.h. von einem Spektralbereich in einen Zeitbereich rücktransformiert.

Durch Schaltung 321 um ein Bildpunktabtastintervall verzögert wird im Synthesefilter 312 der zweite der genannten vier Bildpunkte berechnet. Entsprechend wird durch die Schaltungen 313, 321 und 322 der dritte der vier Bildpunkte um 3 Bildpunktabtastintervalle und durch die Schaltungen 314 und 321 bis 323 der vierte der vier Bildpunkte um 3 Bildpunktabtastintervalle verzögert berechnet. In Schaltung 23 werden die vier Signale bzw. Bildpunkte aus den Synthesefiltern 311 bis 314 zusammengefaßt und zeilenförmig ausgegeben.
Für eine 8 mal 1-DCT wären entsprechend der Beschreibung für Fig. 2 statt der vier Synthesefilter 311 bis 314 acht Synthesefilter und statt der drei Verzögerungsschaltungen 321 bis 323 sieben Verzögerungsschaltungen angeordnet. Für eine z dimensionale inverse DCT können die Schaltungen 311 bis 314, 321 bis 323 und 33 zweimal hintereinander angeordnet werden. Entsprechend der Beschreibung für Fig. 2 werden dann der ersten Schaltungsgruppe z.B. die acht Spalten eines 8 mal 8-Koeffizientenblocks und der zweiten Schaltungsgruppe z.B. die acht Zeilen aus eindimensional invers DCT-transformierten Koeffizienten zugeführt.

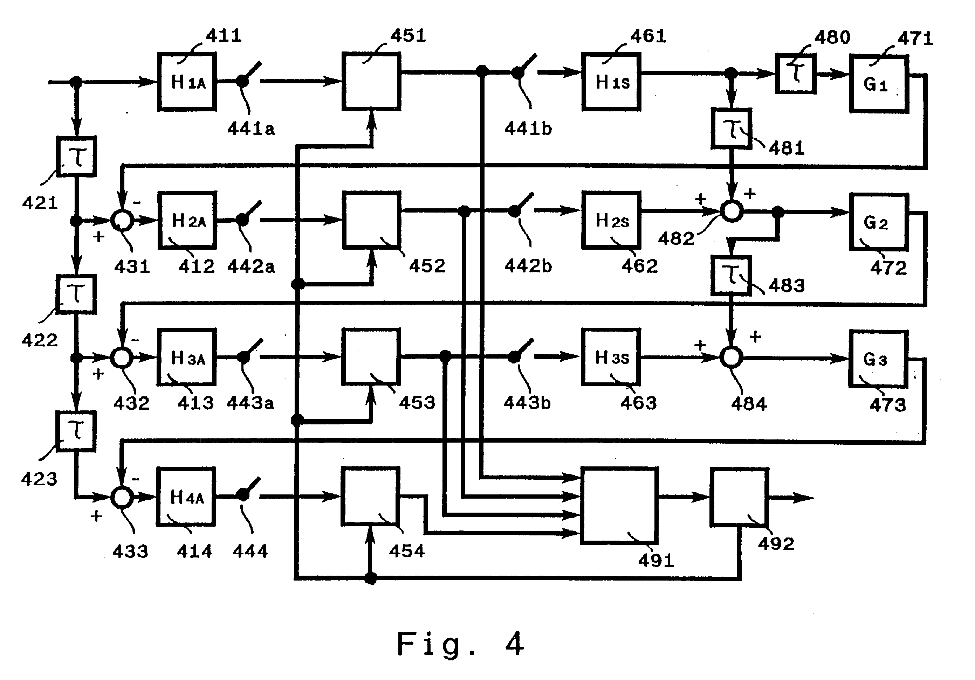

Fig. 4 zeit eine erfindungsgemäße Ausführungsform der Schaltung 13 bzw. 131 im Detail.
Die Analysefilter 411 bis 414 entsprechen den Analysefiltern 211 bis 214. Die Zeitverzögerungsschaltungen 421 bis 423 entsprechen den Zeitverzögerungschaltungen 221 bis 223. Die Synthesefilter 461 bis 463 entsprechen den Synthesefiltern 311 bis 313.

Die Quantisierer 451 bis 454 werden in ihrer Kennlinie durch den Zwischenspeicher 492 gesteuert wie für den Quantisierer 24 und den Zwischenspeicher 25 beschrieben. Schaltung 491 hat die gleiche Funktion wie für Schaltung 23 beschrieben. Die Schalter 441a bis 443a, 441b bis 443b und 444 sollen andeuten, daß ein Signal abgetastet wird. Die Schaltungen 480, 481 und 483 sind Zwischenspeicher, die z.B. für eine 4 mal 1-DCT vier Bildpunkte für die Dauer eines Bildpunktabtastintervalls speichern. Die Schaltungen 471 bis 473 sind Nachfilter. Die Schaltungen 431 bis 433 bilden die Differenz zweier Signale und die Schaltungen 482 und 484 bilden die Summe zweier Signale.

Im Analysefilter 411 wird ein ankommendes Videosignal z.B. eindimensional DCT-transformiert und im Quantisierer 451 quantisiert. Am Ausgang des Quantisierers 451 wird der erste von vier DCT-Koeffizienten, der Gleichanteil, abgegriffen und über die Schaltung 491 dem Zwischenspeicher 492 zugeführt.

Der erste DCT-Koeffizient wird im Synthesefilter 461 z.B. eindimensional invers DCT-transformiert, in der Schaltung 480 zwischengespeichert und in Schaltung 471 derart gefiltert, daß die Faltung von Synthesefilter 461 mit dem Nachfilter 471 ein möglichst optimales Interpolationsfilter für das überabgetastete Signal an 441b ergibt. Optimal bedeutet, daß der Frequenzgang im Durchlaßbereich des Interpolationsfilters nahezu linear und die Dämpfung im Sperrbereich hoch ist.

Das Ausgangssignal von Nachfilter 471 bildet ein Korrektursignal in der Differenzschaltung 431. Aus diesem korrigierten und um ein Bildpunktabtastintervall verzögerten Signal wird in Analysefilter 412 der zweite der vier DCT-Koeffizienten berechnet und über den Quantisierer 452 und die Schaltung 491 dem Zwischenspeicher 492 zugeführt. Dieser zweite DCT-Koeffizient wird im Synthesefilter 462 wieder invers DCT-transformiert, im Summierer 482 zu dem entsprechend verzögerten Ausgangssignal des Synthesefilters 461 addiert und das daraus resultierende Signal über ein Nachfilter 472 als Korrektursignal in die Differenzschaltung 432 eingespeist. Die Faltung des Nachfilters 472 mit dem Synthesefilter 462 ergibt wieder ein möglichst optimales Interpolationsfilter wie oben für den ersten DCT-Koeffizienten beschrieben.

Die Wirkungsweise der Schaltungen 413, 423, 453, 463, 473, 484 und 433 für den dritten Koeffizienten entspricht der der für den zweiten DCT-Koeffizienten genannten Schaltungen. Der vierte DCT-Koeffizient wird aus dem korrigierten Ausgangssignal der Schaltung 433 und dem folgenden Analysefilter 454 gewonnen.

Die Laufzeit des Signals durch z.B. die Schaltungen 411, 451, 461,480 und 471 muß der der Schaltung 421 entsprechen, anderenfalls kann durch zusätzliche Zeitverzögerungsschaltungen eine entsprechende Anpassung erfolgen.

Die Nachfilter 471, 472 und 473 benötigen für die Multiplikation mit den Filterkoeffizienten Stützstellen, d.h. Bildpunkte aus benachbarten 4 mal 1-Bildpunktblöcken. Diese Stützstellen können z.B. zusätzlich in den Zwischenspeichern 480, 481 und 483 gespeichert sein.

Das Nachfilter 471 kann z.B. folgende Koeffizienten haben:
-0,037 -0,037 0 0,074 0,148 0,222 0,259 0,222 0,148 0.074 0 -0,037 -0,037
Das Nachfilter 472 kann z.B. folgende Koeffizienten haben:
-0,111 0 0,333 0,566 0,333 0 -0,111
Das Nachfilter 473 kann z.B. folgende Koeffizienten haben:
-0,143 0,286 0,714 0,286 -0,143

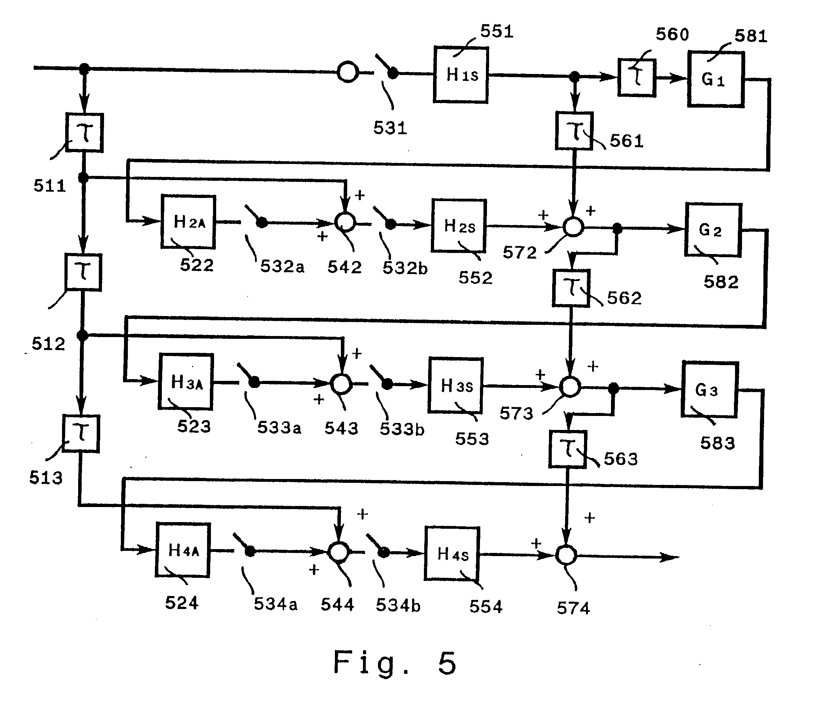

Fig. 5 zeit eine erfindungsgemäße Ausführungsform der Schaltung 17 bzw. 171 im Detail.
Die Analysefilter 522 bis 524 entsprechen den Analysefiltern 212 bis 214. Die Zeitverzögerungsschaltungen 511 bis 513 entsprechen den Zeitverzögerungsschaltungen 321 bis 323. Die Synthesefilter 551 bis 554 entsprechen den Synthesefiltern 311 bis 314. Die Schalter 531, 532a bis 534a und 532b bis 534b sollen andeuten, daß ein abgetastetes Signal empfangen wird.

Die Schaltungen 560 bis 563 sind Zwischenspeicher, die z.B. für eine inverse 4 mal 1-DCT vier Koeffizienten für die Dauer eines Bildpunktabtastintervalles speichern. Die Schaltungen 581 bis 583 sind Nachfilter. Die Schaltungen 542 bis 544 und 572 bis 574 bilden die Summe zweier Signale.

Im Synthesefilter 551 wird der erste DCT-Koeffizient eines ankommenden transformierten Videosignals z.B. eindimensional invers DCT-transformiert. Das Ausgangssignal bildet die ersten Anteile von den z.B. vier Ausgangssignal-Bildpunkten. Diese werden über einen Zwischenspeicher 561 der Summationsschaltung 572 zugeführt. Die Ausgangssignale von Synthesefilter 551 werden über einen Zwischenspeicher 560 in der Schaltung 581 mit den gleichen Koeffizienten und Stützstellen wie für das Nachfilter 471 nachgefiltert und über das Analysefilter 522 als Korrektursignal der Summationsschaltung 542 zugeführt.

Der zweite ankommende DCT-Koeffizient wird zusammen mit diesem Korrektursignal dem Synthesefilter 552 zugeführt und invers DCT-transformiert. Das Ausgangssignal bildet die zweiten Anteile von den vier Ausgangs-Bildpunkten und wird in Schaltung 572 zu den ersten Anteilen addiert. Die Summe aus ersten und zweiten Anteilen wird über einen Zwischenspeicher 562 der Summationsschaltung 573 und über ein Nachfilter 582 und ein Analysefilter 523 der Summationsschaltung 543 als Korrekturwert zugeführt. Entsprechend der Berechnung mit dem zweiten DCT-Koeffizienten wird auch mit dem dritten in den Schaltungen 543, 553, 573, 583, 524 und 544 verfahren. Die Filterkoeffizienten und Stützstellen für die Nachfilter 582 bzw. 583 entsprechen denen der Nachfilter 472 bzw. 473.

Der vierte DCT-Koeffizient wird nach entsprechender zeitlicher Verzögerung durch die Schaltungen 511 bis 513 in Schaltung 544 mit einem Korrektursignal summiert und im Synthesefilter 554 invers eindimensional DCT-transformiert. Das Ausgangssignal von Synthesefilter 554 bildet die vierten Anteile der vier Ausgangs-Bildpunkte und zusammen mit den ersten, zweiten und dritten Anteilen aus dem Zwischenspeicher 563 das endgültige Ausgangssignal der Schaltung 17 bzw. 171.

Die Laufzeit des Signals durch z.B. die Schaltungen 551, 560, 581 und 522 muß der der Schaltung 511 entsprechen. Die Stützstellen aus benachbarten 4 mal 1-Bildpunktblöcken für die Nachfilter können zusätzlich in den Zwischenspeichern 560 bis 562 enthalten sein.

Wie für die Figuren 2 bzw. 3 beschrieben, kann die erfindungsgemäße Schaltung der Figuren 4 bzw. 5 auch für eine 8 mal 1-Blockgröße und/oder für eine zweidimensionale Analyse-, Synthese- und Nachfilterung, z.B. eine zweidimensionale 8 mal 8-DCT erweitert werden.

Statt der vier Quantisierer 451 bis 454 kann auch ein Quantisierer zwischen der Schaltung 491 und dem Zwischenspeicher 492 angeordnet sein. Wenn die Quantisierer aber zwischen Analyse- und Synthesefiltern angeordnet sind, wird der Prädiktionsfehler verringert und eine niedrigere zu übertragende Datenrate bzw. eine bessere Bildqualität bei gleicher Datenrate ermöglicht.

Die Stützstellen aus den benachbarten Blöcken sind transformierte und wieder invers transformierte Bildpunkte. Die in den Nachbarblöcken befindlichen Stützstellen des Nachfilters für den ersten bzw. zweiten bzw. dritten DCT-Koeffizienten werden folgendermaßen gebildet:
Die Signalabtastwerte in dem jeweiligen Nachbarblock werden transformiert und der erste DCT-Koeffizient (Gleichanteil) bzw. der erste und zweite DCT-Koeffizient bzw. der erste, zweite und dritte DCT-Koeffizient wird/werden rücktransformiert. Die sich daraus jeweils ergebenden Signalabtastwert-Blocks sind die Stützstellen für das Nachfilter.

Durch ein geeignetes Filter können auch die Zwischenspeiche 480 und 481 bzw. 560 und 561 entfallen und die Filter 461 und 471 bzw. 551 und 581 zu einem Filter zusammengefaßt werden.

Dieses Filter kann z.B. folgende Koeffizienten haben:
-0,143 0 0,143 0,286 0,429 0,286 0,143 0 -0,143

In diesem Fall sind die Stützstellen aus den benachbarten Blöcken Original-Signalabtastwerte.

### Begriffs-Definitionen:

- Signalabtastwert
   Abtastwert eines analogen oder digitalen Signals. Die Abtastwerte sind in digitaler Form PCM-kodiert (puls code modulation)
- Bildpunkt
   Signalabtastwert eines Videosignals
- Bildpunktabstastintervall
   Zeitdifferenz zwischen den Abtastzeitpunkten zweier benachbarter Bildpunkte in einer Zeile.
- Block, Videosignal-Block
   Ein aus mehreren benachbarten Signalabtastwerten zusammengefaßter Ausschnitt eines Video- oder Audiosignals. Dieser Ausschnitt kann z.B. die Form eines Rechtecks aus z.B. 4 mal 1 Signalabtastwerten (eindimensional) oder die Form eines Quadrates haben. Im Fall eines Quadrates kann der Block z.B. aus 8 untereinanderliegenden Fernsehzeilen-Abschnitten bestehen, wobei jeder Zeilenabschnitt 8 Bildpunkte enthält (zweidimensional). Der Block kann z.B. Original-Signalabtastwerte oder transformierte Signalabtastwerte enthalten.
- Blockgrenze
   Eine gedachte Begrenzungslinie, die einen Block nach außen zu den benachbarten Blöcken hin begrenzt.
- Blockrand
   Die Menge der Signalabtastwerte, die direkt an einer Blockgrenze liegen und nicht durch andere Signalabtastwerte von der Blockgrenze getrennt sind.
- Berechnungsvorschrift
   Eine Vorschrift, nach der die transformierten oder inverstransformierten Signalabtastwerte berechnet werden.
- Transformation, inverse bzw. Rück-Transformation
   Eine Berechnungsvorschrift, mit der ein eindimensionaler oder zweidimensionaler Block von Signalabtastwerten, der als eine erste Matrix aufgefaßt werden kann, mit einem Block von entsprechender Größe und Dimension aus Filter- oder Transformationskoeffizienten, der als eine zweite Matrix aufgefaßt werden kann, multipliziert wird. Das Ergebnis bildet eine Koeffizienten-Matrix von transformierten Signalabtastwerten Eine Schaltung, die diese Berechnungsvorschrift enthält, wird hier als Analysefilter bezeichnet.

Bei einer inversen Transformation wird in Form einer weiteren Matrizenmultiplikation dieser Vorgang rückgängig gemacht, d.h. aus einem Koeffizienten-Block von transformierten Signalabtastwerten werden wieder nahezu (wegen Rundungs- und Quantisierungsfehlern) die Original-Signalabtastwerte gebildet. Eine Schaltung, die diese Berechnungsvorschrift enthält, wird hier als Synthesefilter bezeichnet. Bei bestimmten Transformationsarten werden die Original-Signalabtastwerte, die immer im Zeitbereich liegen, in einen Spektralbereich überführt und bei der inversen oder Rück-Transformation von einem Spektralbereich in den Zeitbereich. Eine Transformationsart ist die diskrete Cosinus-Transformation.
- diskrete Cosinus-Transformation, DCT
   Die Koeffizienten in der Transformationsmatrix sind Abtastwerte von analogen Cosinusfunktionen bestimmter Frequenzen und Phasenlagen.
- Gleichanteil, Wechselanteile
   Bei einer ein- bzw. zweidimensionalen (diskreten Cosinus-) Transformation bildet einer oder mehrere der berechneten transformierten Signalabtastwerte den Mittelwert von Original-Signalabtastwerten oder von eindimensional transformierten Signalabtastwerten. Dieser Koeffizient bzw. diese Koeffizienten sind der Gleichanteil bzw. die Gleichanteile. Alle anderen Koeffizienten des transformierten Blocks sind Wechselanteile.
- Datenkompression, Datenrate
   Um ein breitbandiges Signal (= hohe Datenrate) über einen schmalbandigeren Kanal zu übertragen, muß die Datenrate, d.h. die Anzahl der übertragenen Bits pro Zeiteinheit, reduziert werden (= niedrige Datenrate).
   Durch eine geeignete Codierung vor der Umsetzung auf die niedrige Datenrate und durch eine entsprechende Decodierung eines wieder breitbandigen Signals im Empfänger wird das Originalsignal nahezu oder vollständig wiederhergestellt. Diese Art der Codierung stellt eine Datenkompression dar.
- Prädiktionswert
   Um eine hohe Datenkompression zu erreichen, kann man z.B. in einem Coder den wahrscheinlichen Wert des nächsten zu übertragenden Signalabtastwerts durch die Nachbildung des Decoders im Coder vorhersagen. Dieser wahrscheinliche Wert ist der Prädiktionswert. Es braucht dann z.B. nur die Abweichung von Prädiktionswert übertragen zu werden und nicht ein Signalabtastwert.

## Patentansprüche

1. Signalverarbeitungssystem für digitale Signale, insbesondere digitale Ton- oder Bildsignale, bei dem Signalabtastwerte zu eindimensionalen oder zweidimensionalen Blöcken zusammengefaßt sind, die von benachbarten Blöcken durch Blockränder getrennt sind,
die Blöcke ein Raster bilden,
ein Coder und ein Decoder vorgesehen ist,
die Signalabtastwerte eines jeden Blocks nach einer bestimmten Berechnungsvorschrift durch den Coder transformiert werden,
die transformierten Signalabtastwerte eines jeden entsprechenden Blocks nach einer entsprechenden Berechnungsvorschrift durch den Decoder invers transformiert werden,
**dadurch gekennzeichnet**, daß
- im Coder für alle zu transformierenden Signalabtastwerte bis auf einen letzten eines jeden Blocks durch ein Nachfilter (471, 472 oder 473) ein Korrekturwert für die Berechnung des folgenden zu transformierenden Signalabtastwertes des Blockes gebildet wird, wobei dieses Nachfilter (471, 472 oder 473) so gewählt wird, daß die invers transformierten, vorher transformierten, Signalabtastwerte an den Blockrändern des aktuellen Blocks den invers transformierten, vorher transformierten Signalabtastwerten an den Blockrändern der benachbarten Blöcke angepaßt sind,
- im Decoder für alle transformierten Signalabtastwerte bis auf einen letzten eines jeden entsprechenden Blocks bei der Berechnung eines invers transformierten Signalabtastwertes durch ein entsprechendes Nachfilter (581, 582 oder 583) ein dem Korrekturwert im Coder entsprechender Korrekturwert für die Berechnung des folgenden invers zu transformierenden Signalabtastwertes des Blocks gebildet wird.

2. System nach Anspruch 1, **dadurch gekennzeichnet**, daß die Berechnungsvorschrift für den Coder eine Filterung und für den Decoder eine inverse Filterung ist.

3. System nach Anspruch 2, **dadurch gekennzeichnet**, daß die Berechnungsvorschrift für den Coder eine ein- oder zweidimensionale Transformation, insbesondere eine diskrete Cosinustransformation, und für den Decoder eine entsprechende ein- oder zweidimensionale inverse Transformation, insbesondere eine inverse diskrete Cosinustransformation, ist.

4. System nach Anspruch 2 oder 3, **dadurch gekennzeichnet**, daß der Coder versehen ist mit Analysefiltern (411 - 414), wobei dem ersten Analysefilter (411) und einer ersten Zeitverzögerungsschaltung (421) ein Eingangssignal zugeführt wird, mit jeweils nachgeschalteten Quantisierern (451 - 454), mit bis auf dem letzten Quantisierer (454) jeweils nachgeschalteten Synthesefiltern (461 - 463), mit den Synthesefiltern jeweils nachgeschalteten Nachfiltern (471 - 473), mit vor den Analysefiltern (412 - 414) mit Ausnahme des ersten Analysefilters (411) jeweils angeordneten Zeitverzögerungsschaltungen (421 - 423) und Differenzschaltungen (431 - 433), wobei diese Differenzschaltungen das Ausgangssignal des entsprechenden Nachfilters jeweils vom Ausgangssignal der entsprechenden Zeitverzögerungsschaltung subtrahieren,
mit einem zwischen dem ersten Synthesefilter (461) und dem ersten Nachfilter (471) angeordneten ersten Zwischenspeicher (480), mit zwischen den weiteren Synthesefiltern (462, 463) und den weiteren Nachfiltern (472, 473) jeweils angeordneten Summationsschaltungen (482, 484), mit zwischen dem ersten Synthesefilter (461) und der ersten Summationsschaltung (482) und jeweils zwischen den weiteren Synthesefiltern (462) und den weiteren Summationsschaltungen (484) angeordneten Zwischenspeichern (481, 483), wobei die in ihnen zwischengespeicherten Signale in den Summationsschaltungen (482, 484) jeweils zu den Ausgangssignalen der weiteren Synthesefilter (462, 463) addiert werden,
und mit einer Kombinierschaltung (491), die die Ausgangssignale der Quantisierer zusammenfaßt und einem Summen-Zwischenspeicher (492) zuführt, dessen gespeicherte Datenmenge die Kennlinien der Quantisierer steuert.

5. System nach Anspruch 4, **dadurch gekennzeichnet**, daß der Decoder versehen ist mit Synthesefiltern (551 - 554), wobei dem ersten Synthesefilter (551) und einer ersten Zeitverzögerungsschaltung (511) ein Eingangssignal zugeführt wird, mit dem ersten (551) und weiteren (552, 553) bis auf ein letztes (554) Synthesefilter jeweils nachgeschalteten Nachfiltern (581 - 583),
mit vor den weiteren und dem letzten Synthesefilter jeweils angeordneten Zeitverzögerungsschaltungen (511 - 513) und ersten Summationsschaltungen (542 - 544), die das Ausgangssignal der entsprechenden Zeitverzögerungsschaltungen zu dem jeweils über Analysefilter (522 - 524) geleiteten Ausgangssignal der entsprechenden Nachfilter addieren,
mit einem zwischen dem ersten Synthesefilter (551) und dem ersten Nachfilter (581) angeordneten Zwischenspeicher (560), mit jeweils zwischen den weiteren Synthesefiltern (552, 553) und den weiteren Nachfiltern (582, 583) angeordneten und dem letzten Synthesefilter (554) nachgeschalteten zweiten Summationsschaltungen (572 - 574),
und mit jeweils zwischen den Ausgängen der entsprechenden Synthesefilter (551 - 553) und den entsprechenden zweiten Summationsschaltungen (572 - 574) angeordneten Zwischenspeichern (561 - 563), wobei die entsprechenden Ausgangssignale dieser Zwischenspeicher in den entsprechenden zweiten Summationsschaltungen (572 - 574) zu den Ausgangssignalen der entsprechenden Synthesefilter (552 - 554) addiert werden.

6. System nach Anspruch 4 oder 5, **dadurch gekennzeichnet**, daß bei der Berechnung von transformierten Signalabtastwerten eines Blocks im Coder jeweils entsprechende Synthesefilter (461 bzw. 462 bzw. 463) und entsprechende Nachfilter (471 bzw. 472 bzw. 473) zu einem Kombinations-Filter zusammengefaßt werden, wobei die entsprechenden mit ihnen verbundenen Zwischenspeicher (480, 481 bzw. 483 bzw. 484) entfallen und das Kombinationsfilter für das erste Synthesefilter (461) und das erste Nachfilter (471) insbesondere folgende Koeffizienten hat: -0,143 0 0,143 0,286 0,429 0,286 0,143 0 -0,143, und/oder daß bei der Berechnung von transformierten Signalabtastwerten eines entsprechenden Blocks im Decoder jeweils entsprechende Synthesefilter (551 bzw. 552 bzw. 553) und entsprechende Nachfilter (581 bzw. 582 bzw. 583) zu einem Kombinations-Filter zusammengefaßt werden, wobei die entsprechenden mit ihnen verbundenen Zwischenspeicher (560, 561 bzw. 562 bzw. 563) entfallen und das Kombinationsfilter für das erste Synthesefilter (551) und das erste Nachfilter (581) insbesondere folgende Koeffizienten hat:
-0,143 0 0,143 0,286 0,429 0,286 0,143 0 -0,143.

7. System nach einem oder mehreren der Ansprüche 1 bis 6, **dadurch gekennzeichnet**, daß bei zweidimensionalen Blökken die Signale Videosignale sein können und daß bei eindimensionalen Blöcken die Signale Video- oder Audiosignale sein können.

8. Verfahren zur Verwendung in einem System nach einem der Ansprüche 1 bis 7, **dadurch gekennzeichnet**, daß in einem Coder
- jeweils ein Block von Signalabtastwerten koeffizientenweise transformiert, quantisiert, invers transformiert und mit Signalabtastwerten benachbarter Blöcke nachgefiltert wird,
- aus den nachgefilterten Signalabtastwerten jeweils Korrekturwerte für die Berechnung des nächsten transformierten Signalabtastwertes des aktuellen Blocks gewonnen und vom ankommenden Signal subtrahiert werden,
- Speicherschaltungen die invers transformierten Signalabtastwerte des aktuellen Blocks und die entsprechenden der Nachbarblöcke zwischenspeichern,
- die zwischengespeicherten Signalabtastwerte zu den mit Korrekturwerten aus dem jeweiligen Nachfilter invers transformierten Signalabtastwerten des aktuellen Blocks addiert werden,
- die transformierten, korrigierten und quantisierten Signalabtastwerte des aktuellen Blocks zusammengefaßt und einem weiteren Zwischenspeicher zugeführt werden, dessen Füllstand an gespeicherten Daten die Quantisierer jedes transformierten Signalabtastwertes in ihrer Kennlinie steuert.

9. Verfahren nach Anspruch 8, **dadurch gekennzeichnet**, daß in einem Decoder
- jeweils ein Block von transformierten Signalabtastwerten koeffizientenweise invers transformiert, mit Signalabtastwerten benachbarter Blöcke nachgefiltert und transformiert wird,
- aus den nachgefilterten Signalabtastwerten jeweils Korrekturwerte für die Berechnung des nächsten invers transformierten Signalabtastwertes des aktuellen Blocks gewonnen und zum ankommenden Signal addiert werden,
- Speicherschaltungen die invers transformierten Signalabtastwerte des aktuellen Blocks und die entsprechenden der Nachbarblöcke zwischenspeichern,
- die zwischengespeicherten Signalabtastwerte zu den mit Korrekturwerten aus dem jeweiligen Nachfilter invers transformierten Signalabtastwerten des aktuellen Blocks addiert werden.

## Claims

1. Signal processing system for digital signals, in particular digital audio or picture signals in which signal scanning values are combined into one-dimensional or two-dimensional blocks which are separated from adjacent blocks by block edges, the blocks form a grid,
a coder and a decoder are provided, the signal scanning values of every single block are transformed by the coder according to a certain rule for calculations,
the transformed signal scanning values of every single corresponding block are inverse-transformed by the decoder according to a corresponding rule for calculations,
**characterized in that**
- a correction value for the calculation of the following signal scanning value to be transformed of the block is formed by a post-filter (471, 472 or 473) in the coder for all signal scanning values which are to be transformed except the last one of each block whereby this post-filter (471, 472 or 473) is so selected that the inverse-transformed, previously transformed signal scanning values at the block edges of the current block are matched to the inverse-transformed, previously transformed signal scanning values at the block edges of the adjacent blocks,
- a correction value corresponding to the correction value in the coder for the calculation of the following signal scanning value to be inverse-transformed of the block is formed upon calculation of an inverse-transformed signal scanning value by a corresponding post-filter (581, 582 or 583) in the decoder for all transformed signal scanning values except the last one of each corresponding block.

2. System according to claim 1, **characterized in that** the rule for calculations is a filtering for the coder and an inverse-filtering for the decoder.

3. System according to claim 2, **characterized in that** the rule for calculations for the coder is a one- or two-dimensional transformation, in particular a discrete cosine transformation and that for the decoder is a corresponding one- or two-dimensional inverse transformation, in particular an inverse discrete cosine transformation.

4. System according to claim 2 or 3, **characterized in that** the coder is provided with analysis filters (411 through 414), whereby an input signal is fed to the first analysis filter (411) and the first time delay circuit (421), each with downstream quantizers (451 through 454), each but the last quantizer (454) with downstream synthesis filters (461 through 463), with post-filters (471 through 473) downstream from each of the synthesis filters, with time delay circuits (421 through 423) and difference circuits (431 through 433) situated before each but the first one (411) of the analysis filters (412 through 414), whereby these difference circuits subtract the output signal of the corresponding post-filter always from the output signal of the corresponding time delay circuit, with a first intermediate memory (480) arranged between the first synthesis filter (461) und the first post-filter (471), with adding circuits (482, 484), situated always between the further synthesis filters (462, 463) and the further post-filters (472, 473), with intermediate memories (481, 483) located always between the first synthesis filter (461) and the first adding circuit (482) and always between the further synthesis filters (462) and the further adding circuits (484), whereby the signals temporarily stored in them are added, in the adding circuits (482, 484), always to the output signals of the further synthesis filters (462, 463), and with a combination circuit (491) which combines the output signals of the quantizer and feeds them to a sum intermediate memory (492) whose stored amount of data controls the characteristic curves of the quantizers.

5. System according to claim 4, **characterized in that** the decoder is provided with synthesis filters (551 through 553), whereby an input signal is fed to the first synthesis filter (551) and a first time delay circuit (511), with post-filters (581 through 583) always downstream from the first (551) and further (552, 553) with the exception of a last (554) synthesis filters, with time delay circuits (511 through 513) and first adding circuits (542 through 544) situated always before the further and the last synthesis filters which add the output signal of the corresponding time delay circuits to the output signal - always guided via analysis filters (522 through 524) - of the corresponding post-filters, with an intermediate memory (560) situated between the first synthesis filter (551) and the first post-filter (581), with adding circuits (572 through 574) situated always between the further synthesis filters (552, 553) and the further post-filters (582, 583) and downstream from the last synthesis filter (554), and with intermediate memories (561 through 563) situated always between the outputs of the corresponding synthesis filters (551 through 553) and the corresponding second adding circuits (572 through 574), whereby the corresponding output signals of these intermediate memories are added to the output signals of the corresponding synthesis filters (552 through 554) in the corresponding second adding circuits (572 through 574).

6. System according to claim 4 or 5, **characterized in that** with the calculation of transformed signal scanning values of a block in the coder corresponding synthesis filters (461 or 462 or 463 respectively) and corresponding post-filters (471 or 472 or 473 respectively) are combined to a combination filter, whereby the corresponding intermediate memories (480, 481 or 483 or 484 respectively) which are connected with them are eliminated and the combination filter for the first synthesis filter (461) and the first post-filter (471) has, in particular, the following coefficients: -0.143 0 0.143 0.286 0.429 0.286 0.143 0 -0.143 and/or that with the calculation of transformed signal scanning values of a corresponding block in the decoder always corresponding synthesis filters (551 or 552 or 553 respectively) are combined into one combination filter whereby the corresponding intermediate memories (560, 561 or 562 or 563 respectively) connected with them are eliminated and the combination filter for the first synthesis filter (551) and the first post-filter (581) has, in particular, the following coefficients: -0.143 0 0.143 0.286 0.429 0.286 0.143 0 -0.143.

7. System according to one or several of the claims 1 through 6, **characterized in that** with two-dimensional blocks the signals can be video signals, and that with one-dimensional blocks the signals can be video or audio signals.

8. Method for the use in a system according to one of the claims 1 through 7, **characterized in that** in a coder
- always one block of signal scanning values is, in coefficient form, transformed, quantized, inverse-transformed and post-filtered with signal scanning values of adjacent blocks,
- correction values for the calculation of the next transformed signal scanning value of the current block are always obtained from the post-filtered signal scanning values and subtracted from the incoming signal,
- memory circuits temporarily store the inverse-transformed signal scanning values of the current block and the corresponding values of the adjacent blocks,
- the temporarily-stored signal scanning values are added to the signal scanning values of the current block inverse-transformed with the correction values from the respective post-filter,
- the transformed, corrected and quantized signal scanning values of the current block are combined and fed to a further intermediate memory whose level of stored data controls the characteristic curve of the quantizers for every transformed signal scanning value.

9. Method according to claim 8, **characterized in that** in a decoder
- always one block of transformed signal scanning values is, in coefficient form, inverse-transformed and post-filtered with signal scanning values of adjacent blocks and transformed,
- correction values for the calculation of the next inverse-transformed signal scanning value of the current block are always obtained from the post-filtered signal scanning values and added to the incoming signal,
- memory circuits temporarily store the inverse-transformed signal scanning values of the current block and the corresponding values of the adjacent blocks,
- the temporarily-stored signal scanning values are added to the signal scanning values of the current block inverse-transformed with the correction values from the respective post-filter.

## Revendications

1. Système de traitement de signaux numériques, notamment pour signaux audio et vidéo, dans lequel des valeurs d'échantillonnage sont regroupées en des blocs unidimensionnels ou bidimensionnels, ces blocs étant séparés des blocs adjacents par des bords de bloc,
les blocs formant une grille,
dans lequel sont prévus un codeur et un décodeur, les valeurs d'échantillonnage de chaque bloc étant transformées par le codeur suivant une règle de calcul déterminée,
les valeurs d'échantillonnage transformées de chaque bloc correspondant étant transformées inversément par le décodeur suivant une règle de calcul correspondante,
caractérisé en ce que
- dans le codeur, pour toutes les valeurs d'échantillonnage à transformer - à part la dernière de chaque bloc - une valeur de correction est formée au moyen d'un filtre postérieur (471, 472 ou 473) pour le calcul de la valeur d'échantillonnage suivante du bloc à transformer, ce filtre postérieur (471, 472 ou 473) étant choisi de manière que les valeurs d'échantillonnage inversément transformées, transformées au préalable, soient adaptées au niveau des bords de bloc du bloc actuel aux valeurs d'échantillonnage inversément transformées, transformées au préalable, des bords de blocs de blocs adjacents,
- dans le décodeur, pour toutes les valeurs d'échantillonnage transformées - à part la dernière de chaque bloc correspondant - est formée, pour le calcul d'une valeur d'échantillonnage inversément transformée, dans un filtre postérieur approprié (581, 582 ou 583), une valeur de correction correspondant à la valeur de correction dans le codeur pour le calcul de la valeur d'échantillonnage suivante du bloc à transformer inversément.

2. Système selon revendication 1, caractérisé en ce que la prescription de calcul est un filtrage pour le codeur et un filtrage inverse pour le décodeur.

3. Système selon revendication 2, caractérisé en ce que la prescription de calcul est une transformation unidimensionnelle ou bidimensionnelle pour le codeur, notamment une transformation cosinus discrète, et pour le décodeur une transformation inverse correspondante unidimensionnelle ou bidimensionnelle, notamment une transformation cosinus discrète inverse.

4. Système selon revendication 2 ou 3, caractérisé en ce que le codeur est pourvu de filtres d'analyse (411 - 414), un signal d'entrée étant acheminé vers le premier filtre d'analyse (411), et vers le premier circuit de temporisation (421) un signal d'entrée, avec chaque fois des quantificateurs montés en aval (451 - 454), avec chaque fois - à part pour le dernier quantificateur (454) des filtres de synthèse (461 - 463), avec des filtres postérieurs (471 - 473) montés en aval des filtres de synthèse, avec des circuits de temporisation (421 - 423) montés en amont des filtres d'analyse (412 - 414) - à l'exception du premier filtre d'analyse (411), et des circuits différentiels (431 - 433), ces circuits différentiels déduisant chaque fois le signal de sortie du filtre postérieur correspondant du signal de sortie respectif du circuit de temporisation correspondant, avec une première mémoire tampon (480) agencée entre le premier filtre de synthèse (461) et le premier filtre postérieur (471), avec des circuits additionneurs (482, 484) agencés entre les autres filtres de synthèse (462, 463) et les autres filtres postérieurs (472, 473), avec des mémoires tampon (481, 483) agencées entre le premier filtre de synthèse (461) et le premier circuit additionneur (482), et des mémoires tampon agencées chaque fois entre les autres filtres de synthèse (462) et les autres circuits additionneurs (484), les signaux stockés temporairement dans ces mémoires tampon étant additionnés dans les circuits d'addition (482, 484) chaque fois aux signaux de sortie des filtres de synthèse ultérieurs (462, 463),
et avec un circuit de combinaison (491) regroupant les signaux de sortie des quantificateurs et les amenant vers une mémoire tampon d'addition (492), dont la quantité de données stockée régit les courbes caractéristiques des quantificateurs.

5. Système selon revendication 4, caractérisé en ce que le décodeur est pourvu de filtres de synthèse (551 - 554), un signal d'entrée étant amené vers le premier filtre de synthèse (551) et un premier circuit de temporisation (511), avec le premier (551) et d'autres (552, 553) filtres de synthèse - à l'exception d'un dernier filtre de synthèse (554) - montés en aval (581 - 583) respectivement, avec des circuits de temporisation (511- 513) agencés respectivement avant les filtres de synthèse ultérieurs et le dernier filtre de synthèse, et des circuits d'addition (542 - 544) additionnant le signal de sortie des circuits de temporisation correspondants au signal de sortie des filtres postérieurs correspondants acheminé respectivement par le filtre d'analyse (522 - 524), avec une mémoire tampon (560) agencée entre le premier filtre de synthèse (551) et le premier filtre postérieur (581), avec des circuits d'addition seconds (572 - 574) agencés chaque fois entre les filtres de synthèse ultérieurs (552, 553) et les autres filtres postérieurs (582, 583) ainsi que le dernier filtre de synthèse (554), et avec des mémoires tampon (561 - 563) respectivement agencées entre les sorties des filtres de synthèse correspondants (551 - 553) et les seconds circuits d'addition correspondants (572 - 574), les signaux de sortie correspondants de ces mémoires tampon étant additionnés dans les seconds circuits d'addition correspondants (572 - 574) aux signaux de sortie des filtres de synthèse correspondants (552 - 554).

6. Système selon revendication 4 ou 5, caractérisé en ce que, pour le calcul de valeurs d'échantillonnage transformées d'un bloc, des filtres de synthèse correspondants (461 ou 462 ou 463) et des filtres postérieurs correspondants (471 ou 472 ou 473) sont groupés dans le codeur pour former un filtre de combinaison, les mémoires tampon correspondantes y reliées (480, 481 ou 483 ou 484) pouvant être laissées de côté, et le filtre de combinaison pour le premier filtre de synthèse (461) et pour le premier filtre postérieur (471) ayant, notamment, les coefficients suivants:
-0,143 0 0,143 0,286 0,429 0,286 0,143 0 -0,143 et/ou, pour le calcul de valeurs d'échantillonnage transformées d'un bloc correspondant, des filtres de synthèse correspondants (551 ou 552 ou 553) et des filtres postérieurs correspondants (581 ou 582 ou 583) sont groupés, dans le décodeur, pour former un filtre de combinaison, les mémoires tampon correspondantes y reliées (560, 561 ou 562 ou 563) pouvant être laissées de côté et que le filtre de combinaison présente les coefficients suivants pour le premier filtre de synthèse notamment (551) et le premier filtre postérieur (581):
-0,143 0 0,143 0,286 0,429 0,286 0,143 0 -0,143

7. Système selon l'une ou plusieurs des revendications 1 à 6, caractérisé en ce que, pour des blocs bidimensionnels, les signaux peuvent être des signaux vidéo et que pour les blocs unidimensionnels, les signaux peuvent être des signaux vidéo ou des signaux audio.

8. Procédé pouvant être utilisé dans un système selon l'une des revendications 1 à 7, caractérisé en ce que dans un codeur,
- à chaque fois un bloc de valeurs d'échantillonnage est transformé, coefficient par coefficient, quantifié, transformé inversément et filtré postérieurement avec des valeurs d'échantillonnage de blocs adjacents;
- à chaque fois des valeurs de correction pour le calcul de la valeur d'échantillonnage suivante du bloc actuel sont gagnées à partir des valeurs d'échantillonnage postfiltrées et déduites du signal entrant;
- des circuits de mémoire stockent temporairement les valeurs d'échantillonnage inversément transformées du bloc actuel et les valeurs correspondantes des blocs adjacents;
- les valeurs d'échantillonnage stockées temporairement sont additionnées aux valeurs d'échantillonnage du bloc actuel inversément transformées par les valeurs de correction du filtre postérieur respectif;
- les valeurs d'échantillonnage transformées, corrigées et quantifiées du bloc actuel sont regroupées et acheminées vers une mémoire tampon ultérieure dont le niveau de remplissage en données stockées détermine la courbe caractéristique des quantificateurs de chaque valeur d'échantillonnage transformée.

9. Procédé selon revendication 8, caractérisé en ce que, dans un décodeur,
- à chaque fois un bloc de valeurs d'échantillonnage transformées est transformé inversément coefficient par coefficient, postfiltré par des valeurs d'échantillonnage de blocs adjacents et transformé,
- sont gagnées à partir des valeurs d'échantillonnage postfiltrées respectives des valeurs de correction pour le calcul de la valeur d'échantillonnage suivante inversément transformée, et additionnées au signal entrant;
- des circuits de mémoire stockent temporairement les valeurs d'échantillonnage inversément transformées du bloc actuel et les valeurs correspondantes des blocs adjacents;
- les valeurs d'échantillonnage stockées temporairement sont additionnées aux valeurs d'échantillonnage du bloc actuel inversément transformées par les valeurs de correction du filtre postérieur respectif.
